# EUROPÄISCHE PATENTANMELDUNG

(11) **EP 1 005 239 A2**
(43) Veröffentlichungstag der Anmeldung: **31.05.2000**
(21) Anmeldenummer: 99440316.0
(22) Anmeldetag: 16.11.1999
(51) Int. Cl.: H04Q 3/00

(54) **Verfahren zum Bereitstellen von Diensten, Infrastrukturverwalter und Dienststeuerplattform**

(30) Priorität: 27.11.1998 DE 19854831
(71) Anmelder: ALCATEL, 75088 Paris (FR)
(72) Erfinder: Rupp, Stephen, Dr., 74354 Besigheim (DE); Stahl, Uwe, 71229 Leonberg (DE); Lautenschlager, Wolfgang, 71287 Weissach-Flacht (DE)
(74) Vertreter: Zinsinger, Norbert

(57) **Zusammenfassung**

Die Erfindung betrifft ein Verfahren zum Bereitstellen von Diensten in einem aus Teilnetzen verschiedener Betreiber (OP1, OP2) bestehenden Telekommunikationsnetz sowie einen Infrastrukturverwalter und eine Dienststeuerplattform zur Durchführung des Verfahrens. Die Dienststeuerplattform eines ersten Teilnetzes weist ein oder mehrere Dienststeuereinheiten und einen Infrastrukturverwalter auf. Eine Dienstvermittlungsfunktion einer Dienstvermittlungsstelle (SSP1) des ersten Teilnetzes des Telekommunikationsnetzes wird durch einen Ruf (CAL1) getriggert. Eine hierbei erzeugte Dienstanforderungsnachricht (SR1) wird von der Dienstvermittlungsstelle (SSP1) an den Infrastrukturverwalter des ersten Teilnetzes geleitet. Der Infrastrukturverwalter ermittelt mittels einer in der Dienstanforderungsnachricht (SR1) transportierten Dienstkennung, von welchem Betreiber der Dienst bereitzustellen ist. Der Infrastruktur Verwalter leitet die Dienstanforderungsnachricht (SR1) an eine der Dienststeuereinheiten (SCP1) des ersten Teilnetzes weiter, wenn als Betreiber der Betreiber (OP1) des ersten Teilnetzes ermittelt wird. Ansonsten übergibt der Infrastrukturverwalter die Steuerung des Dienstes an eine Dienststeuereinheit (SCP4) eines zweiten Teilnetzes, das dem ermittelten Betreiber zugeordnet ist.

## Beschreibung

Die Erfindung betrifft ein Verfahren zum Bereitstellen von Diensten in einem aus Teilnetzen verschiedener Betreiber bestehenden Telekommunikationsnetz nach dem Oberbegriff von Anspruch 1, einen Infrastrukturverwalter nach dem Oberbegriff von Anspruch 10, und eine Dienststeuerplattform nach dem Oberbegriff von Anspruch 14.

Die Erfindung geht von der Erbringung von Diensten gemäß der IN-Architektur (IN = Intelligent Network) aus, wie sie beispielsweise in dem Artikel "Produkte für intelligente Netze", Elektrisches Nachrichtenwesen, Band 63, Nummer 4, 1989, Seite 321 bis 330 von J.-P. Euzen und J. B. Kérihuel beschrieben ist.

Ein Telekommunikationsnetz eines Netzbetreibers verfügt über mehrere Dienstvermittlungsstellen, die über das Signalisierungssystem Nr. 7 mit mehreren Dienststeuereinheiten des Netzbetreibers verbunden sind. Dienste werden nur für Teilnehmer des eigenen Telekommunikationsnetzes erbracht. Die Dienstvermittlungsstellen erkennen betreiberspezifische Trigger-Ereignisse, z. B. eine spezielles Prefix, die anzeigen, daß ein rufender Teilnehmer den Zugang zu einem IN-Dienst benötigt. Erkennt nun eine Dienstvermittlungsstelle bei einem Verbindungsaufbau, an dem sie beteiligt ist, ein solches Trigger-Ereignis, so sendet sie eine Dienstanforderungsnachricht an diejenige Dienststeuereinheit, die über eine Dienstelogik für den benötigten IN Dienst verfügt. Die Dienstlogik stellt ein Steuerprogramm dar, das, sobald es durch die Dienstanforderungsnachricht aktiviert wird, die Ausführung des benötigten IN-Dienstes steuert. Für die Erbringung des benötigten IN Dienstes interagiert hierbei im Folgenden die aktivierte Dienstlogik der Dienststeuereinheit mit der Dienstvermittlungsstelle. Ist der benötigte IN Dienst erbracht, so wird der Dialog zwischen Dienstvermittlungsstelle und Dienststeuereinheit sowie die Ausführung des Dienstlogikprogramms beendet.

Der Erfindung liegt nun die Aufgabe zugrunde, die Bereitstellen von Diensten in einem aus Teilnetzen verschiedener Betreiber bestehenden Telekommunikationsnetzen zu verbessern.

Diese Aufgabe wird gelöst durch ein Verfahren zum Bereitstellen von Diensten in einem aus Teilnetzen verschiedener Betreiber bestehenden Telekommunikationsnetz nach der Lehre von Anspruch 1, einen Infrastrukturverwalter nach der Lehre von Anspruch 10, und eine Dienststeuerplattform nach der Lehre von Anspruch 14.

Der Erfindung liegt hierbei der Gedanke zugrunde, die Dienststeuerplattform, die die Erbringung von Diensten in einem Telekommunikationsnetz eines Betreibers steuert, in eine zweilagige Struktur aufzuspalten: Ein als untere Lage neu eingeführter Infrastrukturverwalter ermittelt für jede Dienstanforderungsnachricht, von welchem Betreiber der angeforderte Dienst bereitzustellen ist. Anschließend verteilt der Infrastrukturverwalter die Dienstanforderungsnachricht an eine der Dienststeuereinheiten des Betreibers oder übergibt die Steuerung des Dienstes in die Verantwortung eines anderen Netz- oder Dienstbetreibers. Die obere Lage der Dienststeuerplattform bilden die Dienststeuereinheiten des Betreibers.

Der Vorteil der Erfindung besteht darin, daß so eine offene Dienstarchitektur möglich wird und die Dienstvermittlungsstellen und Dienststeuereinheiten entkoppelt werden. Dadurch werden zum einen komplexe Dienstszenarien möglich. Dienste stehen nun betreiberunabhängig zur Verfügung. Weiter wird durch diese Entkopplung der Aufbau von Multi-Dienstplattformen begünstigt, die Diensterbringung wird beschleunigt. Diese Vorteile werden hierbei erreicht, ohne bestehende Standards in diesem Bereich (IN-Architektur, IN = Intelligent Network) ändern zu müssen, was eine schnelle und kostengünstige Realisierung ermöglicht.

Vorteilhafte Ausgestaltungen der Erfindung sind den Unteransprüchen zu entnehmen.

Weiter ist es vor allem vorteilhaft, wenn durch den Infrastrukturverwalter auch Rufnummernportabilitäts-Funktionen erbracht werden. Dadurch wird das Dienstmanagement vereinfacht (separates Infrastruktur-Management), die Dienststeuereinheiten werden von diesen Infrastruktur-Aufgaben entlastet, die so auch schneller ausgeführt werden können. Weiter kann für Rufnummernportabilitätsfunktionen und die Funktionen des Infrastrukturverwalters nach Anspruch 1 vorteilhafterweise eine gemeinsame Datenbasis verwendet werden.

Weiter ist es vor allem vorteilhaft, INAP- Konverterfunktionen (INAP = Intelligent Network Application Protocol) in dem Infrastrukturverwalter vorzusehen. Hierdurch werden die Dienstvermittlungsstellen und Dienststeuereinheiten weiter entkoppelt, die Zusammenarbeit von Produkten verschiedener Hersteller und die Verwendung bestehender Einrichtungen wird erleichtert.

Im folgenden wir die Erfindung anhand mehrerer Ausführungsbeispiele unter Zuhilfenahme beiliegender Zeichnungen beispielhaft erläutert.
- Fig. 1: zeigt ein Blockschaltbild eines Ausschnittes aus einem Telekommunikationsnetz mit zwei verschiedenen Betreibern zugeordneten erfindungsgemäßen Dienststeuerplattformen.
- Fig. 2: zeigt eine funktionelle Darstellung eines erfindungsgemäßen Infrastrukturverwalters für ein erstes Ausführungsbeispiel.
- Fig. 3: zeigt eine funktionelle Darstellung eines erfindungsgemäßen Infrastrukturverwalters für ein zweites Ausführungsbeispiel.
- Fig. 4: zeigt eine funktionelle Darstellung eines erfindungsgemäßen Infrastrukturverwalters für ein drittes Ausführungsbeispiel.

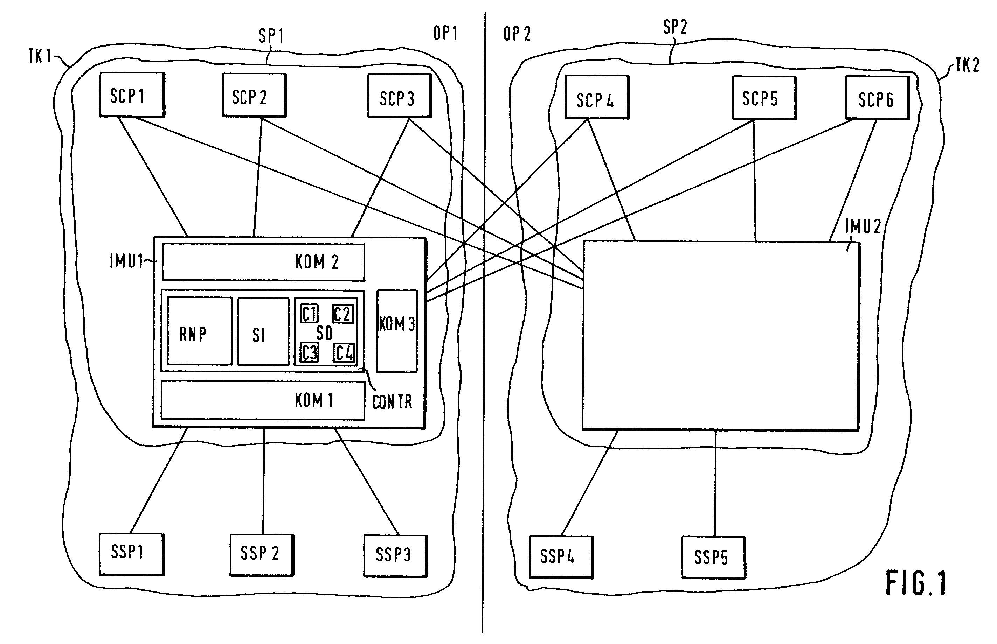

Fig. 1 zeigt beispielhaft zwei Teilnetzen TK1 und TK2 eines Telekommunikationsnetz, die unterschiedlichen Betreiber OP1 bzw. OP2 zugeordnet sind. Es ist natürlich möglich, daß das Telekommunikationsnetze weiter Teilnetze umfaßt. Bei den Teilnetzen TK1 und TK2 handelt es sich um übliche Fernsprechnetz. Es ist jedoch auch möglich, daß die Teilnetzen TK1 und TK2 auch der Daten- oder Videoübertragung dient. Bei den Teilnetzen TK1 und TK2 kann es sich auch um Mobilfunknetze handeln. Die Teilnetzen TK1 und TK2 können wiederum aus mehreren miteinander verbundenen, unterschiedlichen Teilnetzen bestehen.

Die Teilnetzen TK1 und TK2 werden jeweils von einer Vielzahl miteinander verbundenen Vermittlungsstellen gebildet, von denen in Fig. 1 beispielhaft jeweils speziell ausgestaltetet Vermittlungsstellen, drei Dienstvermittlungsstellen SSP1 bis SSP3 bzw. zwei Dienstvermittlungsstellen SSP4 und SSP5 gezeigt sind. Weiter weisen die Teilnetzen TK1 und TK2 jeweils eine Dienststeuerplattform SP1 bzw. SP2 auf, die mit den Dienstvermittlungsstellen SSP1 bis SSP3 bzw. SSP4 und SSP5 verbunden sind.

Die Dienststeuerplattformen SP1 und SP2 steuern innerhalb des jeweiligen Teilnetzes die Erbringung von Diensten für Verbindungen des Telekommunikationsnetzes. Die Dienststeuerplattformem SP1 und SP2 weisen einen Infrastrukturverwalter IMU1 bzw. IMU2 und jeweils ein oder mehrere Dienststeuereinheiten auf, von denen in Fig. 1 beispielhaft jeweils drei Dienststeuereinheiten SCP1 bis SCP3 bzw. SCP4 bis SCP6 gezeigt sind.

Bei den Dienstvermittlungsstellen SSP1 und SSP5 handelt es sich vorzugsweise um Dienstvermittlungsstellen gemäß der IN Architektur. Die Zahl der Dienstvermittlungsstellen SSP1 und SSP5 ist beispielhaft gewählt, es muß jedoch zumindest eine solche Vermittlungsstelle im jeweiligen Teilnetz TK1 bzw. TK2 vorhanden sein. Die Dienstvermittlungsstellen SSP1 bis SSP5 sind über das jeweilige Signalisierungsnetz des jeweiligen Teilnetzes TK1 bzw. TK2, beispielsweise über ein Nr. 7 Signalisierungsnetz, mit dem Infrastrukturverwalter IMU1 bzw. IMU2 verbunden. Es ist auch möglich, daß Anstelle des Signalisierungsnetzes ein breitbandiges Datennetz, beispielsweise ein ATM-, DQDB oder IP Datennetze (ATM = Asynchronous Transfer Mode, DQDB = Distributed Queue Dual Bus, IP = Internet Protocol) für diese Verbindungen verwendet wird.

In der Steuerung der Dienstvermittlungsstellen SSP1 bis SSP5 sind Dienstvermittlungsfunktion implementiert. Die Dienstvermittlungsfunktionen erkennen jeweils bestimmte Trigger Ereignisse beim Aufbau einer Verbindung, die über die jeweilige Dienstvermittlungsstelle aufgebaut wird. Solche Trigger-Ereignisse können beispielsweise bestimmte gerufene Rufnummer (Verbindungsziel) oder bestimmte Eigenschaften des rufenden und gerufenen Teilnehmers (Verbindungsursprung) sein. Wird ein solches Ereignis beim Aufbau einer Verbindung von einer Dienstvermittlungsfunktion für einen Ruf erkannt, so erzeugt sie eine Dienstanforderungsnachricht, sendet sie an den Infrastrukturverwalter IMU1 bzw. IMU2 und führt im daran anschließenden Dialog (Dienstinteraktion) die an sie von dem Infrastrukturverwalter IMU1 bzw. IMU2 gerichteten Befehle aus, die die weitere Bearbeitung der Verbindung betreffen. Solche Befehle bestehen beispielsweise in der Weiterleitung der Verbindung zu einer anderen Rufnummer oder der Anlage von Sprachansagen oder Spracherkennungssystemen, beispielsweise mittels eines Dienstunterstützungssystems.

Im folgenden wird der Aufbau der Dienststeuerplattformen SP1 und SP2 beispielhaft anhand der Dienststeuerplattform SP1 erläutert.

Die Dienststeuereinheiten SCP1 bis SCP3 und der Infrastrukturverwalter IMU1 werden jeweils von miteinander über ein Kommunikationsnetze verbundenen Rechnerplattformen gebildet, auf denen Applikationen zur Erfüllung der jeweiligen Funktion aufsetzen. Es ist auch möglich, daß die Dienststeuereinheiten SCP1 bis SCP3 und der Infrastrukturverwalter IMU1 virtuelle Maschinen darstellen, die auf ein oder mehrere miteinander verbundene Server-Rechner verteilt sind. Bei dem Kommunikationsnetz handelt es sich um ein Rechnernetz, das der Verknüpfung von Rechnerplattformen dient, beispielsweise um ein breitbandiges Datennetz wie ein LAN (Local Area Network). Es ist jedoch auch möglich, daß es sich bei dem Kommunikationsnetz um das Signalisierungsnetz des Teilnetzes TK1 handelt. Verschiedene Dienststeuereinheiten können auch über unterschiedliche Kommunikationsnetze mit dem Infrastrukturverwalter IMU1 verbunden sein. Der Infrastrukturverwalter IMU1 ist weiter mit den Dienststeuereinheiten SCP4 bis SCP6 des Teilnetzes TK2 und mit den Dienststeuereinheiten weiterer Teilnetze über ein Kommunikationsnetz verbunden. Bei diesem Kommunikationsnetz handelt es sich vorzugsweise um das Signalisierungsnetz des Telekommunikationsnetzes. Es kann sich bei diesem Kommunikationsnetz jedoch auch um ein anderes Datennetz, beispielsweise um ein IP Netz handeln).

Die Funktionsweise der Dienststeuereinheiten SCP1 bis SCP3 entspricht vorzugsweise jeweils der eines Dienststeuerpunktes gemäß der IN-Architektur. Die Dienststeuereinheiten SCP1 bis SCP3 weisen jeweils ein oder mehrere Dienstlogika auf. Die Dienstlogika stellen jeweils ein Dienststeuerprogramm dar, das die Steuerung der Erbringung eines speziellen Dienstes beschreibt. Wird die Ausführung einer der Dienstlogika für eine Verbindung aktiviert, so wird ein Prozeß gestartet, der das jeweilige Dienststeuerprogramm für diese Verbindung durchführt.

Der Infrastrukturverwalter IMU1 weist drei Kommunikationseinheiten KOM1 bis KOM3 und eine Steuereinheit CONTR auf.

Die Kommunikationseinheit KOM1 führt Funktionen durch, die eine Interaktion mit den Dienstvermittlungsfunktionen der Dienstvermittlungsstellen SSP1 bis SSP3 und insbesonders einen Empfang und eine Interpretation der von diesen Dienstvermittlungsfunktionen stammenden Dienstanforderungsnachrichten ermöglicht. Diese Funktionen umfassen Funktionen zur Bearbeitung der hierfür verwendeten Transportprotokolle, beispielsweise der Transportprotokolle des Signalisierungssystems Nr. 7. Auf diesen Funktionen setzen Funktionen auf, die das TCAP Protokoll des ITU-T Signalisierungssystem Nr. 7 und das darauf aufsetzende INAP Protokoll (TCAP = Transport Capabilities Application Part, INAP = Intelligent Network Applications Protocol) bearbeiten, mittels dem Dienstvermittlungsfunktionen und Dienststeuerfunktionen gemäß der IN-Architektur interagieren. Die im Rahmen dieses Protokolls ausgetauschten IN-Applikationsnachrichten (INAP Nachrichten) sowie die grundlegend Dienste und Aktionen dieses Protokolls werden beispielsweise in der Empfehlung ITU-T Q.1219, Kapitel 6.5. Intelligent Network Applications Protokoll, Seite 26 bis 40 und detaillierter in der Empfehlung ITU-T Q.1219 für IN CS-1 erläutert.

Die Kommunikationseinheiten KOM2 und KOM3 führen Funktionen durch, die eine Interaktion mit den Dienststeuereinheiten SCP1 bis SCP3 bzw. den Dienststeuereinheiten SCP4 bis SCP6 ermöglichen. Diese Funktionen umfassen für die Kommunikationseinheit KOM2 Funktionen zur Bearbeitung von Transportprotokollen, bei denen es sich vorzugsweise um für die Kommunikation in LAN Rechnernetzen verwendeten Protokollen, beispielsweise Ethernet-, Fast-Ethernet-, FDDI- oder Token-Protokolle handelt. Auf diesen Funktionen setzen dann Funktionen zur Bearbeitung des IP Protokolls und des TCP Protokoll (IP = Internet Protokol, TCP = Transport Control Protocol) auf. Die Kommunikationseinheit KOM3 weist vorteilhafterweise die bei der Kommunikationseinheit KOM1 beschriebenen Funktionsgruppen zur Kommunikation über ein Nr. 7 Signalisierungsnetz auf.

Die Steuereinheit CONTR wird von auf der Rechnerplattform des Infrastrukturverwalters IMU1 ausgeführten Applikationsprogrammen gebildet. Diese Applikationsprogramme realisieren aus funktioneller Sicht drei Funktionen RNP, Sl und SD.

Die Dienstanforderungsnachrichten, die von den Dienstvermittlungsstellen SSP1 bis SSP3 beim Triggern einer Dienstvermittlungsfunktion an den Infrastrukturverwalter IMU1 gesendet werden, werden an die Funktion SD geleitet. Die Funktion SD ermittelt mittels der in der Dienstanforderungsnachricht transportierten Dienstkennung für jede Dienstanforderungsnachricht, von welchem Betreiber der Dienst bereitzustellen ist, der mittels der Dienstanforderungsnachricht angefordert wird. Wenn als Betreiber der Betreiber OP1 des ersten Teilnetzes ermittelt wird, leitet die Funktion SD sodann die Dienstanforderungsnachricht zu eine der Dienststeuereinheit des ersten Teilnetzes weiter. Ansonsten übergibt die Funktion SD die Steuerung des Dienstes an eine Dienststeuereinheit desjenigen anderen Teilnetzes, das dem ermittelten Betreiber zugeordnet ist.

Die Funktion SD weist INAP Konverter C1 bis C4 auf. Diese INAP-Konverter ermöglichen den Anschluß von Dienstvermittlungsstellen bzw. Dienststeuereinheiten, die mittels unterschiedlicher INAP-Versionen kommunizieren. Die INAP-Konverter konvertieren zum einen die ankommenden, spezifischen INAP Nachrichten in eine einheitlich, im Infrastrukturverwalter IMU1 verwendete INAP-Version. Zum anderen konvertieren sie die abgehenden INAP Nachrichten in die spezifischen, von der jeweiligen Dienstvermittlungsstelle bzw. der jeweiligen Dienststeuereinheit verwendete INAP-Version. Auf die INAP Konverter C1 bis C4 kann auch verzichtet werden.

Die Funktion RNP stellt eine Dienstelogik bereit, die als Dienst eine Rufnummernportabilitätsfunktion erbringt. Die Rufnummernportabilitätsfunktion wertet die Zieladresse von Rufen so um, daß sie in das Teilnetz desjenigen Netzbetreibers geleitet werden, über den der Zielteilnehmer mit dem Telekommunikationsnetz verbunden ist. Die Rufnummernportabilitätsfunktion ermittelt hierbei zur Zielrufnummer den zugeordneten Netzbetreiber und wertet anschließend die Ziel-Rufnummer um, beispielsweise durch Voranstellung eines speziellen Prefixes, das das Ziel-Teilnetz adressiert. Dienstanforderungsnachrichten, die als Dienst eine Rufnummernportabilitätsfunktion anfordern, werden von der Funktion SD an die Funktion RNP verteilt, die somit die für diesen Dienst im Teilnetz TK1 zuständige Dienststeuerfunktion darstellt.

Die Funktion SI stellt eine Dienst-Interaktions-Funktion bereit. Diese Funktion wird durch den Empfang einer Dienstanforderungsnachricht für einen Ruf aktiviert, ermittelt sämtliche für den Ruf zu erbringenden Dienste, und erzeugt und sendet im Folgenden die entsprechenden Dienstanforderungsnachrichten an die Funktion SD.

Auf die Funktionen RNP und S1 kann auch verzichtet werden.

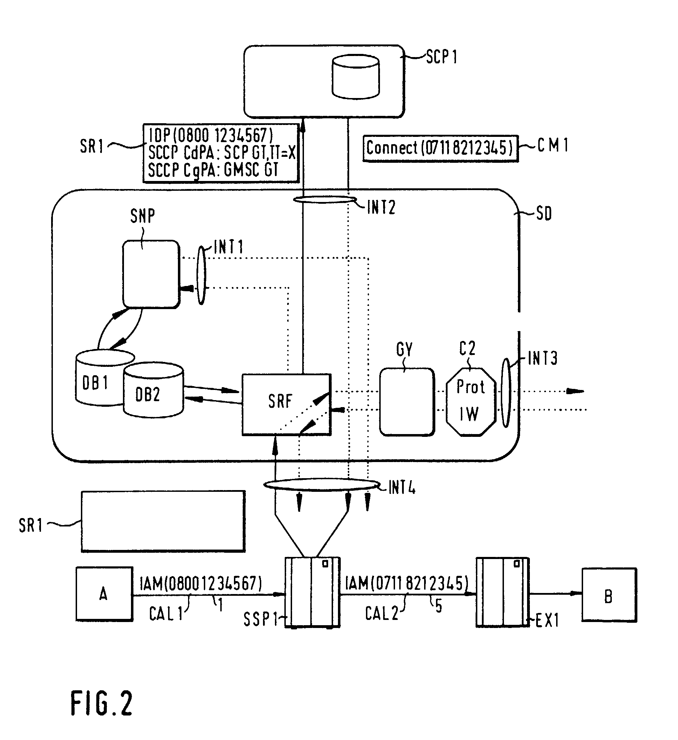

Im folgenden wird nun die genaue Funktionsweise der Funktion SD sowie die detaillierte Durchführung des erfindungsgemäßen Verfahrens anhand der Figuren 2, 3 und 4 erläutert.

Fig. 2 zeigt zwei Endgeräte A und B, die Dienstvermittlungsstelle SSP1, die Vermittlungsstelle EX1, die Funktion SD und die Dienststeuereinheit SCP1. Die Funktion SD weist drei Unterfunktionen SNP, SRF und GY, den INAP Konverter C2 und zwei Datenbanken DB1 und DB2 auf. die Funktion SD weist weiter vier logische Schnittstellen INT1 bis INT4 auf, wobei die Schnittstelle INT1 die Schnittstelle zur Unterfunktion SNP, die Schnittstelle INT2 die Schnittstelle zu den Steuereinheiten des Teilnetzes TK1, die Schnittstelle INT3 die Schnittstelle zu den Steuereinheiten der übrigen Teilnetze des Telekommunikationsnetzes und die Schnittstelle INT4 die Schnittstelle zu den Dienstvermittlungsstellen des Teilnetzes TK1 ist.

Den Schnittstellen INT1 bis INT3 sind jeweils ein anderer Interconnetion Type zugeordnet. Über jede der Schnittstellen INT1 bis INT4 kann ein anderer Satz von INAP Operationen zur Verfügung stehen.

Die Unterfunktion SRF empfängt Dienstanforderungsnachrichten von den Dienstvermittlungsstellen SSP1 bis SSP3 über die Schnittstelle INT4 und ermittelt, über welche der Schnittstellen INT1 bis INT3 sie die Dienstanforderungsnachrichten jeweils weiterzuleiten hat. Sie ermittelt somit den Interconnection Typ, der der Dienstanforderungsnachricht zuzuordnen ist. Hierzu bestimmt sie unter anderem mittels der in der Dienstanforderungsnachricht transportierten Dienstkennung und mittels Zugriff auf die Datenbank DB1, welchem Betreiber der jeweilige von der Dienstanforderungsnachricht angeforderte Dienst zugeordnet ist. Wenn als Betreiber der Betreiber des ersten Teilnetzes TK1 ermittelt wird, leitet sie die Verbindungsanforderung an eine Dienststeuereinheit des Teilnetzes TK1 weiter, ordnet ihr also den Interconnection Typ der Schnittstelle INT2 zu. Ansonsten leitet sie die Dienstanforderungsnachricht an die Unterfunktion SNP weiter oder wertet die Dienstanforderungsnachricht um und leitet sie über die Unterfunktion GY und den INAP Konverter C2 in das Teilnetz des ermittelten Betreibers weiter, ordnet ihr also den Interconnection Typ INT1 bzw. INT3 zu. Hierdurch übergibt sie die Steuerung des angeforderten Dienstes an eine Dienststeuereinheit des ermittelten Betreibers.

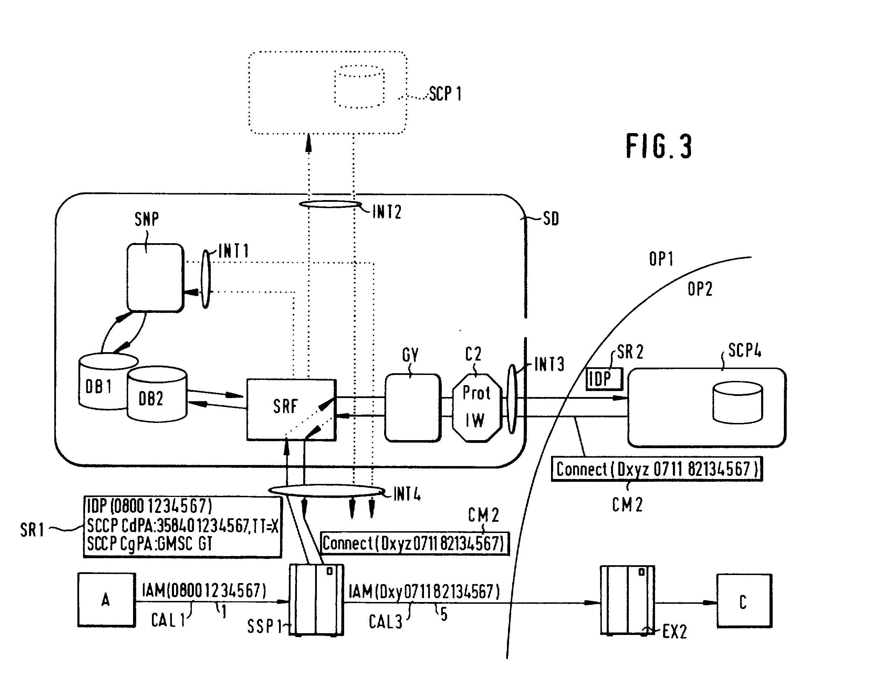

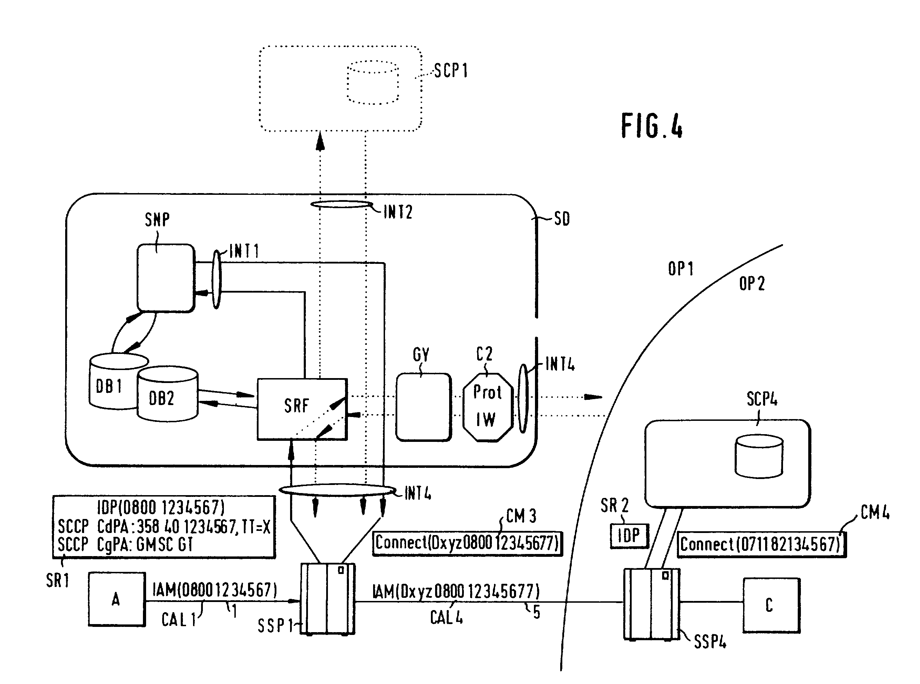

Die detaillierte Funktionsweise der Unterfunktion SNP wird anhand von Fig. 4 und die der Unterfunktion GY und des INAP Konverters C2 anhand von Fig. 3 erläutert.

In einem ersten Ausführungsbeispiel wird die Diensterbringung von einer Dienststeuereinheit des Betreibers OP1 gesteuert.

Auf einen Ruf von dem Endgerät A wird eine Verbindungsanforderung CAL1 durch das Telekommunikationsnetz geleitet. Diese Verbindungsanforderung enthält als Zielrufnummer eine Dienstrufnummer, beispielsweise die Rufnummer 0800 1234567. Die Ankunft der Verbindungsanforderung CAL1 triggert in der Dienstvermittlungsstelle SSP1 eine Dienstvermittlungsfunktion, die eine Dienstanforderungsnachricht SR1 an den Infrastrukturverwalter IMU1 sendet.

Die Dienstanforderungsnachricht SR1 wird von einer SCCP Nachricht des ITU-T Nr. 7 Signalisierungssystems gebildet, die eine INAP Nachricht (INAP Intelligent Network Application Protocol) zur Dienstanforderung transportiert. Als Zieladresse, die auch als "global title" bezeichnet wird, ist die Dienstrufnummer, also die Rufnummer 0800 1234567 in die Dienstanforderungsnachricht eingetragen. Es ist natürlich auch möglich, daß als Zieladresse eine andersartige Dienstkennung verwendet wird. Die Unterfunktion SRF ermittelt nun mittels Zugriff auf die Datenbank DB2, welchem Betreiber die Zieladresse der Verbindungsanforderung zugeordnet ist.

Hierfür sind in der Datenbank DB2 beispielsweise Daten gespeichert, die speziellen Dienstrufnummern eine Betreiberkennung zuordnen. Die speziellen Dienstrufnummern sind die Dienstrufnummern solcher Dienste, die nicht innerhalb des Teilnetzes TK1, sondern von Steuereinheiten eines anderen Betreibers erbracht werden. Als Kennung ist diesen Dienstrufnummern dann jeweils eine Kennung desjenigen Teilnetzes zugeordnet, in dem die Steuereinheit für den Dienst angesiedelt ist. Es ist auch möglich, daß als Kennung eine spezielle Signalisierungsadresse oder Netzadresse zugeordnet ist, über die die dem Dienst zugeordnete Dienststeuereinheit erreichbar ist.

In dem Beispiel nach Fig. 2 ist die Dienstanforderungsnachricht SR1 an einen Dienst adressiert, der von der Dienststeuereinheit SCP1 des Teilnetzes TK1 gesteuert wird. Die Unterfunktion SRF ordnet somit der Dienstanforderungsnachricht den Interconnection Typ der Schnittstelle INT2 zu. Sie leitet die Dienstanforderungsnachricht SR1 an die Dienststeuereinheit SCP1 weiter, wo die entsprechende Dienststeuerfunktion getriggert wird. Die Dienststeuerfunktion Steuert die Durchführung des Dienstes und sendet hierfür eine Steuerungsnachricht CM1 über den Infrastrukturverwalter IMU1 zurück an die Dienstvermittlungsstelle SSP1. Bei der Steuerungsnachricht CM1 handelt es sich um eine INAP Nachricht, die die von der Verbindungsanforderung CAL1 getriggerte Dienstvermittlungsfunktion der Dienstvermittlungsstelle SSP1 anweist, die Verbindungsanforderung mit der neuen Ziel-Rufnummer 0711 8212345 als Verbindungsanforderung CAL2 weiterzuleiten. Die Verbindungsanforderung CAL2 wird über die Vermittlungsstelle EX1 an das Endgerät B weitergeleitet und anschließend wird die Verbindung zwischen den Endgeräten A und B durch das Telekommunikationsnetz aufgebaut.

Anhand von Fig. 3 wird nun ein zweites Ausführungsbeispiel erläutert, in dem die Diensterbringung von einer Dienststeuereinheit des Betreibers OP2 gesteuert wird.

Fig. 3 zeigt das Endgeräte A und ein Endgerät C, die Dienstvermittlungsstelle SSP1, eine Vermittlungsstelle EX2, die Funktion SD, die Dienststeuereinheiten SCP1 und SCP4 und die Schnittstellen INT1 bis INT4. Die Funktion SD weist die vier Unterfunktionen SNP, SRF und GY, den INAP Konverter C2 und die Datenbanken DB1 und DB2 auf. Die Vermittlungsstelle EX2, das Endgerät C und die Dienststeuereinheit SCP4 sind dem Betreiber OP2 zugeordnet.

Auf einen Ruf von dem Endgerät A wird eine Verbindungsanforderung CAL1 durch das Telekommunikationsnetz geleitet. Die Ankunft der Verbindungsanforderung CAL1 triggert in der Dienstvermittlungsstelle SSP1 eine Dienstvermittlungsfunktion, die Dienstanforderungsnachricht SR1 an den Infrastrukturverwalter IMU1 sendet.

In dem Beispiel nach Fig. 3 ist die Dienstanforderungsnachricht an einen Dienst adressiert, der von der Dienststeuereinheit SCP4 des Teilnetzes TK2 gesteuert wird. Die Unterfunktion SRF erhält so von der Datenbank DB2 auf ihre Anfrage die Betreiberkennung des Teilnetzes TK2. Die Unterfunktion verändert nun die Zieladresse der Dienstanforderungsnachricht SRI, indem sie der Dienstrufnummer die ermittelte Betreiberkennung voranstellt, ordnet ihr den Interconnection Type der Schnittstelle INT3 zu und sendet die veränderte Dienstanforderungsnachricht als Dienstanforderungsnachricht SR2 über die Unterfunktion GY und den INAP Konverter C2 an die Dienststeuereinheit SCP4, die durch diese veränderte Zieladresse adressiert wird. Die Dienstanforderungsnachricht SR2 stellt hierbei eine SCCP Nachricht dar, die eine INAP Nachricht transportiert.

In der Dienststeuereinheit SCP4 wird die entsprechende Dienststeuerfunktion getriggert, die sodann zur Steuerung des Dienstes eine Steuerungsnachricht CM2 über den Infrastrukturverwalter IMU1 und über die Unterfunktion GY und den INAP Konverter C2 an die Dienstvermittlungsstelle SSP1 sendet. Bei der Steuerungsnachricht CM2 handelt es sich um eine INAP Nachricht, die die von der Verbindungsanforderung CAL1 getriggerte Dienstvermittlungsfunktion der Dienstvermittlungsstelle SSP1 anweist, die Verbindungsanforderung mit der neuen Ziel-Rufnummer Dxyz 0711 821234567 als Verbindungsanforderung CAL2 weiterzuleiten. Die Kennung Dxyz adressiert hierbei das Teilnetz OP2.

Bei der Steuerung des durch die Dienstanforderungsnachricht SR2 getriggerten Dienstes erkennt die Dienstelogik der Dienststeuereinheit SCP4, daß die Dienstanforderungsnachricht SR2 aus dem Teilnetz eines anderen Netzbetreibers stammt. Dies hat zur Folge, daß sie zu der Rufnummer, an die sie den Ruf leiten will, zusätzlich eine Portierungskennung hinzufügt, die ihr Teilnetz adressiert.

Auf das Hinzufügen einer Portierungskennung durch die Dienststeuereinheit SCP4 kann natürlich auch verzichtet werden. Wenn dann eine Steuernachricht von der Dienststeuereinheit SCP4 ein Endgerät eines anderen Teilnetzes adressiert, wird von der Funktion SD mittels Zugriff auf die Funktion RNP eine Rufnummernportabilitätsfunktion auf die in der Steuernachricht transportierte Zielrufnummer angewendet. Eine weitere Möglichkeit besteht darin, daß eine solche Steuernachricht in der Dienstvermittlungsstelle SSP1 einen Rufnummernportabilitätsdienst triggert, der sodann von der Funktion RNP für die Dienstvermittlungsstelle SSP1 erbracht wird.

Die Unterfunktion GY und der INAP Konverter C2 stellen eine Netzübergangsfunktion in andere Teilnetze des Telekommunikationsnetzes bereit.

Der INAP Konverter C2 stellt eine Konvertierung zwischen den verschieden Formaten von Dienstanforderungsnachrichten und Steuernachrichten verschiedener Teilnetze bereitstellt. Er konvertiert somit beispielsweise einerseits die in der Dienstanforderungsnachricht SR2 transportierte INAP Nachricht in die im Teilnetz TK2 verwendete INAP-Version und andererseits die in der Steuernachricht SR2 transportierte INAP Nachricht in die im Teilnetz TK1 verwendete INAP-Version. Werden gleiche INAP Versionen verwendet, kann auf den INAP Konverter C2 natürlich auch verzichtet werden.

Die Unterfunktion GY stellt eine Überwachungs- und Filterfunktion bereit, die die Zugriffsmöglichkeiten auf Einrichtungen des Teilnetzes TK1 durch Steuernachrichten anderer Teilnetze des Telekommunikationsnetzes beschränkt. Sie gestattet es den während einer Dienstinteraktion von andern Teilnetzen an das Teilnetz TK1 gesendeten Steuernachrichten nur einen begrenzten Satzes von INAP Operationen im ersten Teilnetz auszuführen. Dieser Satz von INAP Operationen ist so gewählt, daß kein Zugriff auf sicherheitsrelevante Daten, beispielsweise Vergebührungsdaten, möglich ist. Weiter protokolliert die Unterfunktion GY die Dienstinteraktion zwischen

Steuereinheiten anderer Teilnetze und Dienstvermittlungsfunktion des Teilnetzes TK1. Auf die Überwachungs- oder die Filterfunktion könnte auch verzichtet werden.

Die Verbindungsanforderung CAL3 wird über die Vermittlungsstelle EX2 an das Endgerät C weitergeleitet und anschließend wird die Verbindung zwischen den Endgeräten A und C durch das Telekommunikationsnetz aufgebaut.

Anhand von Fig. 4 wird nun ein drittes Ausführungsbeispiel erläutert, in dem die Diensterbringung ebenfalls von einer Dienststeuereinheit des Betreibers OP2 gesteuert wird.

Fig. 4 zeigt die Endgeräte A und C, die Dienstvermittlungsstellen SSP1 und SSP4, die Funktion SD, die Dienststeuereinheiten SCP1 und SCP4 und die Schnittstellen INT1 bis INT4. Die Funktion SD weist die drei Unterfunktionen SNP, SRF und GY, den INAP Konverter C2 und die Datenbanken DB1 und DB2 auf. Die Dienstvermittlungsstelle SSP4, das Endgerät C und die Dienststeuereinheit SCP4 sind dem Betreiber OP2 zugeordnet.

Auf einen Ruf von dem Endgerät A wird eine Verbindungsanforderung CAL1 durch das Telekommunikationsnetz geleitet. Die Ankunft der Verbindungsanforderung CAL1 triggert in der Dienstvermittlungsstelle SSP1 eine Dienstvermittlungsfunktion, die die Dienstanforderungsnachricht SR1 an den Infrastrukturverwalter IMU1 sendet.

In dem Beispiel nach Fig. 4 ist die Dienstanforderungsnachricht ebenfalls an einen Dienst adressiert, der von der Dienststeuereinheit SCP4 des Teilnetzes TK2 gesteuert wird. Die Übergabe der Steuerung des Dienstes ist in dem Ausführungsbeispiel nach Fig. 4 jedoch anders realisiert als in dem Ausführungsbeispiel nach Fig. 3:

Die Unterfunktion SRF erhält von der Datenbank DB2 auf ihre Anfrage eine Kennung, die der Unterfunktion SNP zugeordnet ist. Diese Kennung ist in der Datenbank DB2 solchen Dienstrufnummern zugeordnet, die von einer Dienststeuereinheit eines anderen Teilnetzes gesteuert werden. Solchen Dienstrufnummern kann hierbei auch alternativ entweder eine Betreiberkennung wie in dem Ausführungsbeispiel nach Fig. 3 oder eine Kennung der Unterfunktion SNP wie nach dem Ausführungsbeispiel nach Fig. 4 zugeordnet sein. Beide Verfahren könnten so parallel von der Unterfunktion SRF bereitgestellt werden.

Die Unterfunktion verändert nun die Zieladresse der Dienstanforderungsnachricht SR1, indem sie der Dienstrufnummer die ermittelte Kennung voranstellt, ordnet ihr den Interconnection Type der Schnittstelle INT1 zu und leitet die Dienstanforderungsnachricht SR1 an die Unterfunktion SNP weiter.

Es ist auch möglich, daß die Datenbank DB2 für die in der Dienstanforderungsnachricht SR1 eingetragene Dienstrufnummer keine Kennung zurückgibt und die Dienstrufnummer als solche die Unterfunktion SNP als Dienststeuereinheit adressiert. Nicht an einen Dienst des Teilnetzes TK1 gerichtete Dienstanforderungsnachricht werden somit aufgrund ihrer Adressierung automatisch an die Unterfunktion SNP geleitet, auf die Datenbank DB2 wird verzichtet.

Die Unterfunktion SNP ermittelt nun mittels Zugriff auf die Datenbank DB1, von welchem Betreiber der durch die Dienstrufnummer adressierte Dienst bereitgestellt wird. Die Datenbank DB1 ist hierzu analog zur Datenbank DB2 aufgebaut. Die Unterfunktion SNP erhält somit in diesem Ausführungsbeispiel auf ihrer Anfrage die Betreiberkennung desjenigen Teilnetzes mitgeteilt, in dem der Dienst erbracht wird. Zur Übergabe der Steuerung an eine Dienststeuereinheit des ermittelten Betreibers initiiert die Unterfunktion SNP nun das Senden einer Steuernachricht an die Dienstvermittlungsstelle SSP1, mittels der diese veranlaßt wird, den Ruf in das Teilnetz desjenigen Netzbetreibers weiterzuleiten, dem die Betreiberkennung zugeordnet ist. Die Unterfunktion SNP stellt somit eine Dienststeuerfunktion dar, die Steuernachrichten an Dienstvermittlungsfunktion des Teilnetzes TK1 sendet. Die neue Zielrufnummer des Rufes wird hierbei beispielsweise durch die Hinzufügung der Betreiberkennung als Prefix zur bisherigen Zielrufnummer gebildet.

Da die Datenbanken DB1 und DB2 sehr ähnlich aufgebaut sind, ist es vorteilhaft, daß sie über eine gemeinsame Datenbasis verfügen. Diese Datenbasis kann hierbei eine Teilmenge einer Rufnummernportabilitätsdatenbank sein, auf die auch die Funktion RNP zugreift.

In diesem Ausführungsbeispiel sendet die Unterfunktion SNP eine Steuernachricht CM3 an die Dienstvermittlungsstelle SSP1. Bei der Steuerungsnachricht CM3 handelt es sich um eine INAP Nachricht, die die von der Verbindungsanforderung CAL1 getriggerte Dienstvermittlungsfunktion der Dienstvermittlungsstelle SSP1 anweist, die Verbindungsanforderung mit der neuen Ziel-Rufnummer Dxyz 0800 123567 als Verbindungsanforderung CAL4 weiterzuleiten. Die Kennung Dxyz adressiert hierbei das Teilnetz OP2.

Die Verbindungsanforderung CAL4 wird in das Teilnetz TK2 und dort zur Dienstvermittlungsstelle SSP4 geleitet. Bei der Ankunft der Verbindungsanforderung CAL4 in der Dienstvermittlungsstelle SSP1 triggert diese eine Dienstvermittlungsfunktion, die eine Dienstanforderungsnachricht SR2 an den Infrastrukturverwalter IMU2 sendet. Die Dienstanforderungsnachricht SR2 wird im folgenden wie nach Fig. 2 von der Dienststeuereinheit SCP4 des eigenen Teilnetzes bearbeitet und eine Steuernachricht CM4 zurück an die Dienstvermittlungsstelle SSP4 gesendet. Bei der Steuerungsnachricht CM4 handelt es sich um eine INAP Nachricht, die die von der Verbindungsanforderung CAL4 getriggerte Dienstvermittlungsfunktion der Dienstvermittlungsstelle SSP4 anweise, die Verbindungsanforderung mit der neuen Ziel-Rufnummer 071182134567 an das Endgerät C weiterzuleiten. Anschließend wird die Verbindung zwischen den Endgeräten A und C durch das Telekommunikationsnetz aufgebaut.

## Patentansprüche

1. Verfahren zum Bereitstellen von Diensten in einem aus Teilnetzen (TK1, TK2) verschiedener Betreiber (OP1, OP2) bestehenden Telekommunikationsnetz, wobei bei dem Verfahren eine Dienstvermittlungsfunktion einer Dienstvermittlungsstelle (SSP1 bis SSP3) eines ersten Teilnetzes des Telekommunikationsnetzes durch einen Ruf (CAL1) getriggert wird, für den ein Dienst zu erbringen ist, und die Erbringung des Dienstes von einer dienstspezifischen Dienstlogik einer Dienststeuereinheit (SCP1 bis SCP6) gesteuert wird,
**dadurch gekennzeichnet**, daß eine beim Triggern der Dienstvermittlungsfunktion von der Dienstvermittlungsfunktion erzeugte Dienstanforderungsnachricht (SR1) von der Dienstvermittlungsstelle (SSP1) an einen Infrastrukturverwalter (IMU1) des ersten Teilnetzes geleitet wird, daß der Infrastrukturverwalter (IMU1) mittels einer in der Dienstanforderungsnachricht (SR1) transportierten Dienstkennung ermittelt, von welchem Betreiber der Dienst bereitzustellen ist, und daß der Infrastruktur Verwalter (IMU1) die Dienstanforderungsnachricht (SR1) an eine Dienststeuereinheit (SCP1 bis SCP3) des ersten Teilnetzes weiterleitet, wenn als Betreiber der Betreiber (OP1) des ersten Teilnetzes ermittelt wird und der Infrastrukturverwalter (IMU1) ansonsten die Steuerung des Dienstes an eine Dienststeuereinheit eines zweiten Teilnetzes (TK2) übergibt, das dem ermittelten Betreiber zugeordnet ist.

2. Verfahren nach Anspruch 1, dadurch gekennzeichnet, daß als Dienstkennung die im Ruf (CAL1) transportierte Dienstrufnummer in der Dienstanforderungsnachricht (SR1) transportiert wird.

3. Verfahren nach Anspruch 1, dadurch gekennzeichnet, daß als Dienstanforderungsnachricht (SR1) eine SCCP-Nachricht über das Signalisierungsnetz des ersten Teilnetzes (OP1) zum Infrastrukturverwalter (IMU1) transportiert wird und der Infrastrukturverwalter (IMU1) die Zieladresse der SCCP Nachricht als Dienstkennung auswertet.

4. Verfahren nach Anspruch 1, dadurch gekennzeichnet, daß der Infrastrukturverwalter (IMU1) zur Übergabe der Steuerung des Dienstes eine Dienstanforderungsnachricht (SR2) über eine Netzübergangsfunktion in das zweite Teilnetz (TK2) sendet.

5. Verfahren nach Anspruch 4, dadurch gekennzeichnet, daß der Infrastrukturverwalter (IMU1) eine INAP Dienstanforderungsnachricht zur Übergabe der Steuerung in das zweite Teilnetz (TK2) sendet.

6. Verfahren nach Anspruch 3 und 4, dadurch gekennzeichnet, daß der Infrastrukturverwalter (IMU1) die Zieladresse der SCCP Nachricht umwertet und die so veränderte SCCP Nachricht (SR2) in das zweite Teilnetz (TK2) sendet.

7. Verfahren nach Anspruch 4, dadurch gekennzeichnet, daß die Netzübergangsfunktion (C2) Steuereinheiten des zweiten Teilnetzes (TK2) nur die Ausführung eines begrenzten Satzes von Funktionen im ersten Teilnetz (TK1) gestattet.

8. Verfahren nach Anspruch 4, dadurch gekennzeichnet, daß die Netzübergangsfunktion (C2) die Dienstinteraktion zwischen Steuereinheiten des zweiten Teilnetzes (TK2) und der Dienstvermittlungsfunktion protokolliert.

9. Verfahren nach Anspruch 1, dadurch gekennzeichnet, daß der Infrastrukturverwalter (IMU1) zur Übergabe der Steuerung des Dienstes das Weiterleiten des Rufes in das Teilnetz des ermittelten Betreibers veranlaßt.

10. Infrastrukturverwalter (IMU1, IMU2) zur Unterstützung der Bereitstellung von Diensten in einem aus Teilnetzen (TK1, TK2) verschiedener Betreiber (OP1, OP2) bestehenden Telekommunikationsnetz,
**dadurch gekennzeichnet**, daß der Infrastrukturverwalter (IMU1) mit einer ersten Kommunikationseinheit (KOM1) versehen ist, um beim Triggern einer Dienstvermittlungsfunktion durch einen Ruf (CAL1) von einer Dienstvermittlungsstellen (SSP1 bis SSP3) des ersten Teilnetzes des Telekommunikationsnetzes erzeugte Dienstanforderungsnachrichten (SR1) zu empfangen, daß der Infrastrukturverwalter (IMU1) mit einer zweiten Kommunikationseinheit (KOM2) zur Interaktion mit Dienststeuereinheiten (SCP1 bis SCP3) des ersten Teilnetzes versehen ist, und daß der Infrastrukturverwalter (IMU1) mit einer Steuereinheit (CONTR) versehen ist, die so ausgestaltet ist, daß sie mittels einer in der Dienstanforderungsnachricht (SR1) transportierten Dienstkennung ermittelt, von welchem Betreiber (OP1, OP2) der Dienst bereitzustellen ist, und daß sie die Dienstanforderungsnachricht an eine der Dienststeuereinheiten (SCP1 bis SCP3) des ersten Teilnetzes weiterleitet, wenn als Betreiber der Betreiber (OP1) des ersten Teilnetzes ermittelt wird und sie ansonsten die Steuerung des Dienstes an eine Dienststeuereinheit (SCP4 bis SCP6) eines zweiten Teilnetzes übergibt, das dem ermittelten Betreiber zugeordnet ist.

11. Infrastrukturverwalter (IMU1) nach Anspruch 10, dadurch gekennzeichnet, daß die Steuereinheit (CONTR) weiter so ausgestaltet ist, daß sie eine Rufnummernportabilitätsfunktion für Rufe erbringt.

12. Infrastrukturverwalter (IMU1) nach Anspruch 10, dadurch gekennzeichnet, daß die Steuereinheit (CONTR) weiter so ausgestaltet ist, daß sie eine gemeinsame Datenbank zur Bereitstellung der Rufnummernportabilitätsfunktion und zur Ermittlung des Betreibers verwendet.

13. Infrastrukturverwalter (IMU1) nach Anspruch 10, dadurch gekennzeichnet, daß der Infrastrukturverwalter (IMU1) mit ein oder mehreren INAP-Konvertern (C1 bis C4) zum Anschluß von Dienststeuereinheiten und Dienstvermittlungstellen mit unterschiedlichen INAP-Schnittstellen versehen ist.

14. Dienststeuerplattform (SP1, SP2) zur Steuerung von Diensten in einem Telekommunikationsnetz, das verschiedenen Betreibern (OP1, OP2) zugeordnete Teilnetze (TK1, TK2) aufweist, wobei die Dienststeuerplattform (SP1) mit ein oder mehreren Dienststeuereinheiten (SCP1 bis SCP3) zur Ausführung dienstspezifischer Dienstlogika versehen ist, die einem ersten Teilnetz (TK1) des Telekommunikationsnetzes zugeordnet sind,
**dadurch gekennzeichnet**, daß die Dienststeuerplattform (SP1) weiter mit einem Infrastrukturverwalter (IMU1) versehen ist, der mit den ein oder mehreren Dienststeuereinheiten (SCP1, SCP3) verbunden ist, daß der Infrastrukturverwalter (IMU1) mit einer ersten Kommunikationseinheit (KOM1) versehen ist, um beim Triggern einer Dienstvermittlungsfunktion durch einen Ruf (CAL1) von einer Dienstvermittlungsstelle (SSP1 bis SSP3) des ersten Teilnetzes des Telekommunikationsnetzes erzeugte Dienstanforderungsnachrichten (SR1) zu empfangen, und daß der Infrastrukturverwalter (IMU1) mit einer Steuereinheit (CONTR) versehen ist, die so ausgestaltet ist, daß sie mittels einer in der Dienstanforderungsnachricht (SR1) transportierten Dienstkennung ermittelt, von welchem Betreiber der Dienst bereitzustellen ist, und daß sie die Dienstanforderungsnachricht an eine der ein oder mehreren Dienststeuereinheiten (SCP1 bis SCP3) des ersten Teilnetzes weiterleitet, wenn als Betreiber der Betreiber (OP1) des ersten Teilnetzes ermittelt wird und sie ansonsten die Steuerung des Dienstes an eine Dienststeuereinheit eines zweiten Teilnetzes (TK2) übergibt, das dem ermittelten Betreiber zugeordnet ist.
